# Europäisches Patentamt

# European Patent Office

# Office européen des brevets

(19)

(11) Veröffentlichungsnummer: **0 004 538**
**B1**

(12) **EUROPÄISCHE PATENTSCHRIFT**

(45) Veröffentlichungstag der Patentschrift:
**12.05.82**

(51) Int. Cl.³: **B 21 C 37/18, E 04 H 12/08**

(21) Anmeldenummer: **79100243.9**

(22) Anmeldetag: **29.01.79**

(54) Konisches Rohr aus schraubenförmig gewickeltem Bandmaterial.

(30) Priorität: **10.04.78 DE 2815477**

(43) Veröffentlichungstag der Anmeldung:
**17.10.79 Patentblatt 79/21**

(45) Bekanntmachung des Hinweises auf die Patenterteilung:
**12.05.82 Patentblatt 82/19**

(84) Benannte Vertragsstaaten:
**BE FR GB LU NL**

(56) Entgegenhaltungen:
**DE-A-2 443 691**
**DE-A-2 602 983**
**DE-B-1 135 402**
**DE-B-1 243 131**
**DE-B-1 777 330**
**GB-A-1 276 725**
**US-A-1 962 428**
**US-A-3 191 289**
**US-A-3 771 978**

(73) Patentinhaber: **Vulkan Werk für Industrie- und Aussenbeleuchtung GmbH, Postfach 30 13 49, D-5000 Köln 30 (DE)**

(72) Erfinder: **Duppach, Josef, Alter Traßweg 34, D-5060 Bergisch Gladbach 3 (DE)**

(74) Vertreter: **Kern, Wolfgang Dipl.-Ing. et al, Patentanwälte Tischer, Kern & Brehm Albert-Rosshaupter-Strasse 65, D-8000 München 70 (DE)**

Konisches Rohr aus schraubenförmig gewickeltem Bandmaterial

Die Erfindung betrifft ein konisches Rohr mit sich stetig verjüngendem Rohrquerschnitt aus schraubenförmig gewickeltem Bandmaterial mit schraubenförmig verlaufender Naht, deren Steigungswinkel sich in einer Axialrichtung des Rohres stetig verkleinert und längs der die Bandmaterialränder fest miteinander verbunden sind.

Solche bekannten konischen Rohre erfordern zur Herstellung trapezförmige Blechzuschnitte (DE-B-1 777 330, DE-B-1 243 131). Die Herstellung eines solchen trapezförmigen Bandmaterials ist sehr aufwendig, wobei der Winkel der trapezförmig zulaufenden Bandmaterialränder jeweils an die Konizität des herzustellenden Rohres angepaßt werden muß und bei dem späteren Wickeln der konischen Rohre der Steigungswinkel in Richtung des sich stetig erweiternden Rohrquerschnittes kontinuierlich vergrößert werden muß, wobei als Steigungswinkel der spitze Winkel bezeichnet wird, der von der Wickelnahtkante und der Lotrechten zur Rohrlängsachse eingeschlossen wird.

Bei einem anderen bekannten konischen Rohr, das durch schraubenförmiges Wickeln von Bandmaterial erzeugt wird (US-A-1 962 428), wird ein an sich mit parallelen Randkanten versehenes Bandmaterial unter einem konstanten Winkel zu dem konischen Rohr gewickelt bzw. zu einzelnen konischen Rohrteilen, die ineinandergesteckt werden, wobei die Erzeugung der Konizität unter diesen Bedingungen nur möglich ist, wenn das Band beim Wickeln eine bleibende Verformung erleidet.

Bei einem weiteren bekannten Verfahren zur Herstellung konischer Rohrkörper (US-A-3 191 289) gelingt die Erzeugung der Konizität bei konstantem Wickelwinkel nur deshalb, weil das Wickelmaterial eine dünne Folie ist und darüber hinaus mit sich überlappenden Randkanten gewickelt wird.

Schließlich ist die Herstellung eines konischen Rohres aus Wickelmaterial in Form eines trapezförmig zugeschnittenen Streifens bekannt (US-A-3 771 978), der vorzugsweise gekrümmt oder aus mehreren miteinander verbundenen Segmenten zusammengesetzt ist. Dieser Streifen ermöglicht aufgrund seiner Formgebung die Einhaltung eines konstanten Wickelwinkels bei sich stetig verjüngendem Rohrquerschnitt, vorausgesetzt, der Streifen weist einen stetig trapezförmig verlaufenden Zuschnitt auf. In den Fällen, in denen ein aus mehreren Streifenteilen unterschiedlicher Formgebung zusammengesetztes Bandmaterial zum Wickeln verwendet wird, ändert sich an den Übergangsstellen zwischen den Streifenteilen auch der Wickelwinkel, wozu ein erheblicher vorrichtungstechnischer Aufwand erforderlich ist.

Die Aufgabe der Erfindung besteht deshalb darin, ein konisch geformtes Rohr zu schaffen, das sich einfacher herstellen läßt, indem es durch spiralförmiges Wickeln von mit parallelen Rändern versehenem Bandmaterial entsteht.

Diese Aufgabe wird erfindungsgemäß dadurch gelöst, daß das Bandmaterial in Axialrichtung des Rohres in Richtung des sich stetig erweiternden Rohrquerschnittes mit sich gegenüber der Lotrechten zur Rohrlängsachse stetig verkleinerndem spitzem Steigungswinkel der Naht gewickelt ist. Durch diese Bandmaterialform und Wickeltechnik wird also der wesentliche Vorteil erreicht, daß das konische Rohr aus einem Bandmaterial gewickelt werden kann, dessen Ränder parallel zueinander verlaufen, das also keine Trapezform aufweisen muß.

Als Naht, längs der die Bandmaterialränder fest miteinander verbunden sind, hat sich eine Falznaht aus ineinandergreifenden Falzen sehr gut bewährt, die in festen und dichten Eingriff gebracht sind.

Ein solches Rohr, das auch konisches Spiralfalzrohr genannt werden könnte, eignet sich insbesondere als Licht- und Signalmast und ist den bisher verwendeten konischen, längsnahtgeschweißten Rohrmasten hinsichtlich Steifigkeit, Gewicht und Fertigungsaufwand überlegen, da relativ dünne Blechstreifen verwendet werden können, die keines speziellen Zuschnittes bedürfen und einfach von Blechmaterialspulen abgewickelt werden. Die für das Wickeln verwendeten Bleche lassen sich deshalb hinsichtlich ihrer Dicke speziell nach Festigkeitserfordernissen des Mastes auswählen, so daß gegenüber den bekannten durch Biegen in einem besonderen Formwerkzeug hergestellten konischen Rohren aus den genannten Gründen eine Materialersparnis von durchschnittlich 50% erreicht wird.

Vorteilhafte Ausgestaltungen des Erfindungsvorschlages sind in den Unteransprüchen gekennzeichnet.

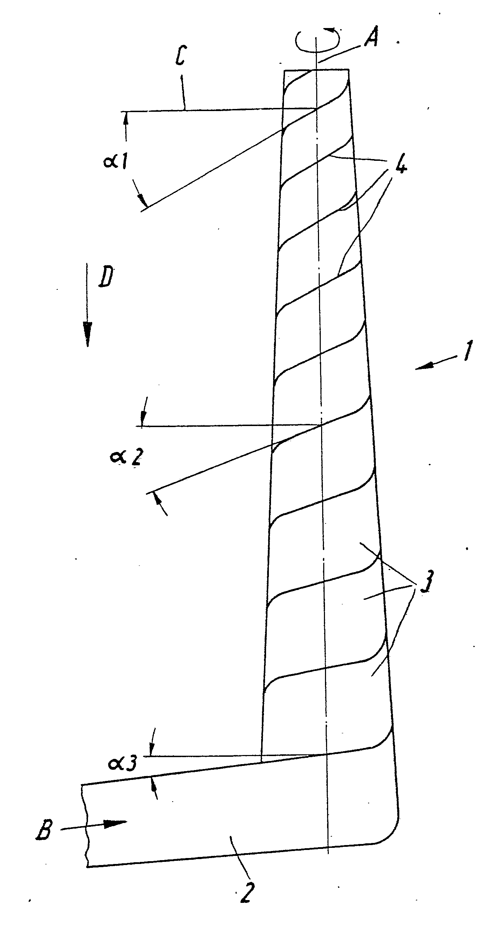

Die Erfindung wird anhand der einzigen Zeichnungsfigur, die in schematischer Darstellung ein teilweise gewickeltes erfindungsgemäßes Rohr zeigt, beispielshalber näher erläutert.

Das Rohr 1 ist aus einem schraubenförmig gewickelten Metallbandmaterial aufgebaut mit einer schraubenförmig verlaufenden Falznaht 4 aus an den Rändern des Bandmaterials 3 ineinandergreifenden Falzen, wobei das Metallband 2 in Richtung des Pfeils B unter einem sich in bezug auf eine Lotrechte C zur Rohrlängsachse A stetig verkleinernden Steigungswinkel $\alpha$ in Richtung des Pfeils D spiralförmig gewickelt ist, so daß sich eine konische Rohrform ergibt.

Bei dem Rohr 1 kann die Falznaht 4, durch die die nebeneinanderliegenden Bandmaterialwindungen 3 miteinander fest und dicht verbunden sind und die durch ineinandergreifende Falze gebildet wird, welche durch Umbördelung der Bandmaterialränder entstehen, entweder auf der äußeren oder auf der inneren Oberfläche des Rohres liegen. Sie kann darüber hinaus ungeglättet sein und zur Herstellung einer glatten Oberfläche durch Spachteln oder Schweißen gefüllt sein. Zur weiteren Verbesserung der Stabilität des Rohres können zusätzlich noch Wellennuten in das Bandmaterial mit eingeprägt werden.

Anstelle einer Falznaht läßt sich auch eine Schweißnaht zur Verbindung der spiralförmig gewickelten Bandmaterialränder verwenden, und zwar sowohl in Form einer Überlappungsschweißnaht als auch in Form einer Stoßschweißnaht.

Des weiteren hat sich bewährt, die Bandmaterialränder, falls sie so gewickelt werden, daß sie sich überlappen, an den sich überlappenden Blechen miteinander zu verkleben oder zu vernieten. Spezielle Kleber sind hierfür im Handel erhältlich.

Anstelle von Metallbandmaterial läßt sich auch ein Bandmaterial aus faserverstärktem Kunststoff verwenden, wodurch ein stabiles, biegesteifes Rohr erhalten wird, das sich durch ein verhältnismäßig geringes Gewicht kennzeichnet.

Andererseits besteht die Möglichkeit, das aus Metallband gewickelte Rohr nachträglich mit Kunststoff zu beschichten oder das Bandmaterial vor dem Wickelvorgang mit Kunststoff zu beschichten, beispielsweise durch Aufspritzen von Kunststoffmassen in flüssiger oder pulverisierter Form oder durch Aufbringen vor Folien auf die Bandmaterialoberfläche. In diesem Zusammenhang sei auch darauf verwiesen, daß das spiralförmig gewickelte Rohr 1 nach dem Wickelvorgang einen Kunststoffbelag in Form von kunststoffgetränkten Faserbahnen erhält, die auf die Oberfläche des Rohres aufgebracht werden. Solche aufgewickelten Beschichtungen können aus Polyester oder Epoxidharz, aber auch aus beliebig anderen, geeigneten Kunststoffen bestehen, die zur Verstärkung Glasfasern oder andere Fasern enthalten können.

Durch geeignete Wahl des Steigungswinkels α lassen sich die unterschiedlichsten Konizitäten erzeugen, und auch die Rohrlänge wird letztlich nur durch die Transport- und die Lagerungsfähigkeit solcher gewickelten Rohre begrenzt.

Als Verwendungszweck für die beschriebenen, spiralförmig gewickelten, konischen Rohre, insbesondere aber für die konischen Spiralfalzrohre, hat sich besonders der Einsatz als Licht- bzw. Beleuchtungsmasten oder Signalmasten bewährt, ferner als Schlagbäume und Schiffsmasten, aber auch als Transportrohre für Gase, insbesondere als Lüftungsrohre.

Des weiteren ist darauf hinzuweisen, daß sich solche gewickelten konischen Rohre auch als Schalungskörper in der Bauindustrie zur Herstellung von Masten, insbesondere Betonmasten, verwenden lassen, wobei das Rohr gegebenenfalls auch als verlorener Schalungskörper dienen könnte.

Schließlich läßt sich zur weiteren Erhöhung der Festigkeit solcher Rohre auch eine Konstruktion wählen, wobei zwei oder noch mehr solcher Rohre ineinander gesteckt werden und sich hinsichtlich ihres die Wicklung bestimmenden Steigungswinkels unterscheiden und/oder auch hinsichtlich ihrer Wickelrichtung, also beispielsweise entgegengesetzt, gewickelt sind.

## Patentansprüche

1. Konisches Rohr (1) mit sich stetig verjüngendem Rohrquerschnitt aus schraubenförmig gewickeltem Bandmaterial (2) mit schraubenförmig verlaufender Naht (4), deren Steigungswinkel sich in einer Axialrichtung des Rohres (1) stetig verkleinert und längs der die Bandmaterialränder fest miteinander verbunden sind, dadurch gekennzeichnet, daß das Bandmaterial (2) in Axialrichtung des Rohres (1) in Richtung (D) des sich stetig erweiternden Rohrquerschnittes mit sich gegenüber der Lotrechten (C) zur Rohrlängsachse (A) stetig verkleinerndem spitzem Steigungswinkel (α) der Naht (4) gewickelt ist.

2. Konisches Rohr nach Patentanspruch 1, dadurch gekennzeichnet, daß die Naht (4) eine Falznaht aus an den Bandmaterialrändern ineinandergreifenden Falzen ist, die auf der inneren Oberfläche des Rohres (1) liegen.

3. Konisches Rohr nach Patentanspruch 1 oder 2, dadurch gekennzeichnet, daß das Rohr eingeprägte Wellennuten aufweist.

4. Konisches Rohr nach einem der Patentansprüche 1 bis 3, dadurch gekennzeichnet, daß auf die Oberfläche des gewickelten Rohres (1) Kunststoff aufgespritzt ist.

5. Konisches Rohr nach Patentanspruch 4, dadurch gekennzeichnet, daß der Kunststoff in Form von kunststoffgetränkten Faserbahnen auf die Oberfläche des gewickelten Rohres (1) aufgebracht ist.

6. Konisches Rohr nach einem der Patentansprüche 1 bis 5, dadurch gekennzeichnet, daß das Bandmaterial (2) aus faserverstärktem Kunststoff besteht.

## Claims

1. Conical tube (1) having a continuously reducing cross-section and consisting of helically wound strip material (2) provided with a helically running seam (4) the pitch of which is decreasing continuously axially of the tube (1) wherein in longitudinal direction of the seam the edges of the strip material are strongly connected to one another, characterized in that the strip material (2) is wound axially of the tube in direction (D) of the continuously increasing cross-section of the tube forming an acute angel (α) of pitch of the seam (4) which is continuously decreasing with respect to the perpendicular (C) to the longitudinal axis (A) of the tube.

2. Conical tube according to claim 1, characterized in that the seam (4) comprises a rebating seam consisting of engaging folds at the edges of the strip material which folds are positioned on the inner surface of the tube (1).

3. Conical tube according to claim 1 or 2, characterized in that the tube comprises wave like grooves pressed in.

4. Conical tube according to one of the claims 1 through 3, characterized in that onto the surface of the wound tube (1) plastic is sprayed.

5. Conical tube according to claim 4, characterized in that the plastic is applied to the surface of the wound tube (1) in form of fibre layers steeped with plastic.

6. Conical tube according to one of the claims 1 through 5, characterized in that the strip material (2) consists of fibre inforced plastic.

## Revendications

1. Tube conique (1) dont la section va en se rétrécissant de façon continue, fait d'un matériau en bande (2) enroulé en hélice avec joint (4) s'étendant de façon hélicoïdale et dont l'angle d'inclinaison va en diminuant constamment suivant une direction axiale par rapport au tube (1), les bords du matériau en bande étant énergiquement liés l'un à l'autre le long de ce joint, caractérisé en ce que le matériau en bande (2) est enroulé dans le sens axial du tube (1) et dans la direction (D) de la section constamment croissante de celui-ci en comportant, par rapport à une normale (C) à l'axe longitudinal (A) de ce tube, un angle d'inclinaison aigu ($\alpha$) du joint qui va toujours en diminuant.

2. Tube conique suivant la revendication 1, caractérisé en ce que le joint (4) est un joint à repliage fait de plis imbriqués l'un dans l'autre à partir des bords du matériau en bande et qui se trouve sur la surface intérieure du tube (1).

3. Tube conique suivant la revendication 1 ou 2, caractérisé en ce que le tube comporte des rainures ondulées embouties.

4. Tube conique suivant l'une des revendications 1 à 3, caractérisé en ce que de la matière plastique est pulvérisée sur la surface extérieure du tube enroulé (1).

5. Tube conique suivant la revendication 4, caractérisé en ce que la matière plastique est rapportée sur la surface extérieure du tube enroulé (1) sous la forme de nappes de fibres imprégnées de matière plastique.

6. Tube conique suivant l'une des revendications 1 à 5, caractérisé en ce que le matériau en bande (2) est constitué par de la matière plastique armée de fibres.